# EUROPÄISCHE PATENTANMELDUNG

(11) **EP 3 156 890 A1**
(43) Veröffentlichungstag der Anmeldung: **19.04.2017**
(21) Anmeldenummer: 15020191.1
(22) Anmeldetag: 16.10.2015
(51) Int. Cl.: G06F 3/0489, B60K 35/00, G06F 3/038, H04M 1/725

(54) **INFOTAINMENTSYSTEM FÜR FAHRZEUGE UNTER VERWENDUNG EINES TRAGBAREN ENDGERÄTES**

(71) Anmelder: Dalezios, Arnold Norbert Antonius Josef, 85221 Dachau (DE); Dalezios, Harald, 83671 Benediktbeuern (DE); Velonias, Alexander, 85586 Poing (DE); Willmitzer, Florian, 81543 München (DE)
(72) Erfinder: Dalezios, Arnold, Norbert, Antonius, Josef, 85221 Dachau (DE); Dalezios,Harald Johannes, 83671 Benediktbeuern (DE); Velonias, Alexander, 85586 Poing (DE); Willmitzer, Florian, 81543 München (DE)

(57) **Zusammenfassung**

*Kurzfassung der Offenbarung:*

Ein Infotainmentsystem für Fahrzeuge, welches sich aus folgenden Komponenten zusammensetzt:
Ein tragbares Endgerät (103) mit mindestens den Funktionsbereichen Kommunikation, Media und Navigation und einer Drahtlos-Schnittstelle (307) zur drahtlosen Verbindung mit anderen Geräten.
Ein externes Eingabegerät (106), das über die Drahtlos-Schnittstelle mit dem tragbaren Endgerät verbindbar ist und mindestens Bedienteile (201, 202, 203) aufweist, die jeweils einem der Funktionsbereiche des tragbaren Endgeräts zugeordnet sind, sowie Mittel (303) zur Übertragung von Steuersignalen, die jeweils einem Bedienteil zugeordnet sind,

wobei das tragbare Endgerät Steuermittel (403) aufweist, um die den Bedienteilen zugeordneten Steuersignale zu empfangen und die Ausführung einer Funktion im zugeordneten Funktionsbereich zu steuern.

## Beschreibung

### HINTERGRUND DER ERFINDUNG

### Gebiet der Erfindung

Die vorliegende Erfindung betrifft ein Infotainmentsystem für Fahrzeuge unter Verwendung eines tragbaren Endgerätes.

### Beschreibung des Stands der Technik

Immer mehr moderne Informationstechnik hält Einzug in die Systeme aktueller Fahrzeuge. Die wichtigsten Funktionsbereiche der Informationstechnik im Fahrzeug werden dabei in so genannte Infotainmentsysteme integriert und setzen sich zusammen aus:
- Kommunikation (von der Telefonfunktion, über den Nachrichten-Versand bis hin zur vollen Nutzung des Internets)
- Media (Musik-, Foto-, Video-Daten)
- Navigation (GPS gestützte Navigation im Fahrzeug)

Fest ins Fahrzeug eingebaute Systeme verwenden für die Funktionsbereiche Kommunikation und Media heute in den meisten Fällen die entsprechenden Funktionen moderner tragbarer Endgeräte, wie z.B. Smartphones, Tablet-PCs oder ähnliche Geräte. Das Smartphone muss dafür mit dem im Fahrzeug eingebauten System gekoppelt werden. Das Prinzip ist dabei wie folgt:
Das Smartphone überträgt seine individuellen Benutzer-Daten an das System des Fahrzeugs. Das können bspw.
Telefon-Kontakte oder Musik-Daten sein. Das Fahrzeug-System zeigt diese Daten dem Benutzer mit Hilfe eines eingebauten Bildschirms an und ermöglicht so dem Benutzer eine Auswahl dieser Daten im Fahrzeugsystem.

Diese fest ins Fahrzeug eingebauten Infotainmentsysteme nutzen also hauptsächlich die Funktionalität des Smartphones, wodurch das Fahrzeugsystem mehr die Bedeutung einer Bediener-Schnittstelle zum Smartphone erlangt. Diese Bediener-Schnittstelle stellt dem Benutzer mit Hilfe von festverbauten Eingabekomponenten (Knöpfe, Dreh- und Schieberegler, etc...) und einem festverbauten Fahrzeugsystem mit eigenem Bildschirm vornehmlich Funktionalität zur Verfügung, die der Benutzer auch direkt auf seinem Smartphone nutzen könnte.

Diesen als Infotainmentsysteme bezeichneten Lösungen ist also gemein, dass sie
1. die Funktionalität des Smartphones einschließlich der individuellen Daten (Telefonkontakte, Audio-, Text- oder Video-Daten, etc...) nutzen und
2. diese Funktionalität dem Benutzer als Schnittstelle zur Verfügung stellen.

Das hat zur Folge, dass die Daten des Smartphones auf das System, welches als Schnittstelle dient, übertragen werden müssen. Zusätzlich müssen große Teile des auf dem Smartphone bereits umgesetzten Systems (Darstellung der Telefonkontakte, Liste der zur Verfügung stehenden Musik, Kartenabbildungen, Nachrichten, etc...) im fest eingebauten System nachgebaut werden. Für alle ins Fahrzeug fest integrierten Lösungen gilt darüber hinaus, dass sie bei einem Fahrzeugwechsel nicht auf ein anderes Fahrzeug übertragbar sind. Selbst wenn das neue Fahrzeug ebenfalls über ein Infotainmentsystem verfügt, muss der Benutzer sein Smartphone zuerst einmal mit dem neuen System koppeln und anschließend die Bedienung des neuen Systems erlernen.

Die Schnittstellen-Lösung in Form eines festverbauten Systems im Fahrzeug bietet jedoch mit Hilfe von Eingabekomponenten (Knöpfe, Dreh- und Schieberegler, etc...) die Möglichkeit, die Funktionen auch während der Fahrt bequem und sicher zu bedienen. Die Eingabekomponenten - angebracht an ergonomisch leicht erreichbaren Stellen - können oft ohne visuelle Kontrolle durch reines Fühlen bedient werden. Die optische Rückkopplung der Eingaben - in Form von entsprechender visueller Darstellung (bspw. auf dem Bildschirm) - zeigt dem Benutzer, welche Eingaben er über die Eingabekomponenten durchgeführt hat. Auf diese Weise ermöglicht das Schnittstellensystem die Verwendung eines Smartphones und die Nutzung dessen Funktionalität durch den Fahrer eines Fahrzeugs auch während der Fahrt. Gleichzeitig ist dies auch das Hauptargument, für die Verwendung eines Schnittstellensystems im Fahrzeug, denn die Bedienung und Verwendung eines Smartphones direkt im Fahrzeug (vor allem durch den Fahrer) ist nicht nur sehr gefährlich, sondern in vielen Ländern längst unter Strafe gestellt.

Der Nachteil fest eingebauter Infotainmentsysteme in Verbindung mit modernen tragbaren Endgeräten ist jedoch deren aufwendige und kostenträchtige Implementierung.

Neben den fest eingebauten Systemen der unterschiedlichen Fahrzeughersteller, gibt es eine große Anzahl an nachrüstbaren Lösungen für unterschiedliche Funktionen.

So gibt es eingebaute Geräte, die sich drahtlos mit einem Smartphone verbinden können und dem Smartphone bspw. als Freisprechanlage (bzw. Soundsystem mit Lautsprecher und Mikrofon) dienen können. Auch gibt es Lösungen, die mit Hilfe eines eigenen Bildschirms, als Anzeige-Gerät für die vom Smartphone übertragenen Daten dienen (siehe DE 20 2004 014 643 U1).

Eine weitere Möglichkeit die Funktionalität und individuellen Daten des Smartphones im Fahrzeug zu nutzen, ist die Umsetzung einer Fernbedienungsvorrichtung zur Steuerung gewisser Basisfunktionen eines Smartphones (siehe EP 00 0001 161 065 A1 oder DE 20 2012 000 043 U1). Dabei entfällt zwar der Aufwand für ein fest eingebautes System oder entsprechende Schnittstellen, doch geht die Benutzerfreundlichkeit eines modernen Infotainmentsystems verloren, nämlich die Integration der oben bereits genannten Funktionsbereiche Kommunikation, Media und Navigation in einem für den Benutzer leicht bedienbaren gemeinsamen Zugang.
- Weder die bei EP 00 0001 161 065 A1**,** noch die bei DE 20 2012 000 043 U1 beschriebene Fernbedienungsvorrichtung verfügt über ein gesamtheitliches Bedienkonzept, um dem Fahrer oder den Passagieren eines Fahrzeuges, die in diesem Kontext wichtigen Informationen und Funktionen, gebündelt zur Verfügung zu stellen.
- EP 00 0001 161 065 A1 bezieht sich dabei nur auf die Fernbedienung eines mobilen Telefons und damit verbunden der Nutzung dessen Telefonfunktion.
- DE 20 2012 000 043 U1 bezieht sich lediglich auf die Steuerung von so genannten tragbaren Medienvorrichtungen (wie bspw. der iPOD^{®} des Herstellers Apple Inc.), die nicht als vollständige Infotainment Lösungen dienen, sondern sich ausschließlich auf die Wiedergabe von medialen Inhalten konzentrieren. Dies ist auch daran ersichtlich, dass die Fernbedienungsvorrichtung nur die nativen Bedienelemente des Gerätes selbst abbildet.

Bei derartigen Fernsteuerungen, die über kein gesamtheitliches Bedienkonzept verfügen, werden dem Fahrer oder den Passagieren eines Fahrzeuges, die in diesem Kontext wichtigen Informationen und Funktionen, nicht gebündelt zur Verfügung gestellt. Eine solche Fernbedienungsvorrichtung kann damit ein Infotainmentsystem und dessen Benutzerfreundlichkeit nicht ersetzen oder abbilden. Um die verschiedenen Funktionsbereiche - wenn dies überhaupt möglich ist - aufrufen oder nutzen zu können, ist eine sehr aufwendige Menü-Navigation durch die tragbare Medienvorrichtung notwendig.

Vor allem bei der Verwendung eines handelsüblichen Smartphones als tragbare Medienvorrichtung, handelt es sich um ein Endgerät mit hoch komplexer System-Architektur und Softwareapplikations-Landschaft und kann leicht über einhundert verschieden Softwareapplikationen enthalten. Um eine übersichtliche Bedienbarkeit zu erhalten, ist auf solchen Smartphones immer nur eine einzige Applikation aktiv im Vordergrund zu sehen und zu bedienen. Ein Wechsel zwischen Applikationen ist daher nur mit sehr aufwendiger Menü-Navigation möglich und beginnt über eine zentrale Taste (in den meisten Fällen die so genannte "Home"-Taste). Diese deaktiviert oder beendet die aktive Applikation und ermöglicht dem Benutzer anschließend die Wahl einer anderen Applikation, die er jedoch erst über weitere Menü-Führungen auswählen und dann starten kann. Ein schneller Wechsel zwischen Applikationen gekoppelt mit der automatischen Ausführung einer bestimmten Funktionalität innerhalb der alten und/oder der neuen Applikation wird nicht unterstützt. Damit ist die Bedienung und Verwendung eines modernen Smartphones während des Fahrens nicht möglich.

### KURZE BESCHREIBUNG DER ERFINDUNG

Die Aufgabe der vorliegenden Erfindung besteht also darin, ein verbessertes Infotainmentsystem für Fahrzeuge anzugeben.

Diese Aufgabe wird durch die in den unabhängigen Ansprüchen definierte Erfindung gelöst; Ausgestaltungen der Erfindung sind in den abhängigen Ansprüchen definiert.

Die hier dargestellte Erfindung beschreibt eine einfache, effektivere und benutzerfreundliche Implementierung zur Nutzung der Funktionalität von Smartphones (oder tragbaren Endgeräten gleicher Funktionalität, wie bspw. Tablet-PCs oder ähnlichen Geräten) in Fahrzeugen.

Anstelle einer bspw. im Fahrzeug fest eingebauten Benutzerschnittstelle für ein Smartphone, wie beispielsweise eines der bekannten Infotainmentsysteme, kann der Benutzer das Smartphone und dessen Funktionalität direkt und in ergonomisch vorteilhafter Weise verwenden. Mit entsprechend angepasster Software-Unterstützung im Smartphone, welche Teil der erfindungsgemäßen Lösung ist, können die in einem tragbaren Endgerät vorhandenen Funktionsbereiche Kommunikation, Media und Navigation in optimaler Weise in einem Fahrzeug genutzt werden.

Moderne tragbare Datenendgeräte verfügen drüber hinaus auch über eine visuelle Darstellung der individuellen Daten des Benutzers (der Bildschirm des Smartphones). Alle weiteren Komponenten, die zur Nutzung der durch das Smartphone zur Verfügung gestellten Funktionalität notwendig sind, bringt dieses ebenfalls mit (bspw. Lautsprecher und Mikrofon zur Nutzung der Telefonfunktion, GPS-Empfänger zur Positionsbestimmung und Nutzung der Navigationsfunktion, Kamera für Videotelefonie, Empfangs- und Sendeeinheit für intemetbasierte Funktionalität, etc.).

Um eine ergonomisch vorteilhafte Bedienung des tragbaren Endgerätes zu ermöglichen, besteht ein entscheidender Teil der hier dargestellten Lösung aus einem externen Eingabegerät, welches sich drahtlos mit einem tragbaren Endgerät verbinden kann. Das mit eigener Stromquelle versehene externe Eingabegerät lässt sich im Fahrzeug an beliebiger, ergonomisch günstiger Stelle platzieren.

Das Eingabegerät ist so ausgelegt, dass es ohne visuelle Kontrolle durch reines Fühlen vom Fahrer oder anderen Passagieren im Fahrzeug bequem und sicher bedient werden kann. Die auf dem Eingabegerät ausgelösten Eingaben werden an das Smartphone übertragen, dort ausgewertet und lösen eine entsprechende Funktion auf diesem aus. Abhängig von der ausgelösten Funktion, kann das Smartphone mittels seiner visuellen Darstellungsmöglichkeit (bspw. dem Bildschirm) eine entsprechende visuelle Reaktion anzeigen und so eine optische Rückkopplung zu den Personen im Fahrzeug (bspw. den das Eingabegerät bedienenden Benutzer) erzeugen. Auf diese Weise lässt sich das Smartphone fernsteuern und somit auch während der Fahrt durch bspw. den Fahrer selbst bedienen. Nur durch die Verwendung dieses externen Eingabegerätes lässt sich die Funktionalität des Smartphones direkt während der Fahrt in einem Fahrzeug nutzen.

Eine weitere entscheidende Komponente der hier vorgestellten Lösung ist die Integration der besagten Funktionsbereiche innerhalb einer Softwareapplikation, die als Teil dieser Erfindung, auf dem Smartphone ausgeführt wird. Diese stellt die drei Funktionsbereiche Kommunikation, Media und Navigation in einer Form dar, dass der Fahrer und die Passagiere des Fahrzeuges, diese auch während der Fahrt ohne größere Ablenkung vom Straßenverkehr erfassen können.

Um auch während der Fahrt schnell und sicher zwischen den Funktionsbereichen wechseln zu können, sind auf dem externen Eingabegerät so genannte Schnell-Zugriffs-Tasten ausgeführt. Diese spiegeln die drei zentralen Funktionsbereiche wider und ermöglichen es bspw. aus der Navigation direkt in den Bereich Kommunikation zu wechseln. Des Weiteren sind die Unterkategorien der Funktionsbereiche (bspw. die Telefonkontakte im Bereich Kommunikation) so aufgebaut und dargestellt, dass mittels des externen Eingabegerätes eine einfache und deutlich erkennbare Navigation und Auswahl der Funktionalität ermöglicht wird.

### Vorteile

Mit entsprechender Software-Unterstützung bieten aktuelle Smartphones (oder tragbare Endgeräte gleicher Funktionalität, wie bspw. Tablet-PCs oder ähnliche Geräten) dieselbe Funktionalität, wie moderne Infotainmentsysteme in (entsprechend hochpreisigen) Fahrzeugen. Im Unterschied zu diesen Systemen, sind Smartphones jedoch
- mobil (der Benutzer kann das Gerät immer mit sich führen)
- update-fähig (Smartphones unterliegen extrem kurzen Update-Zyklen)
- individualisierbar (der Benutzer kann das Aussehen und das Verhalten - softwareseitig - beeinflussen)
- Träger individueller Daten (das Smartphone des Benutzers enthält meist alle individuellen Daten, wie Telefonkontakte, Nachrichten, E-Mails, Fotos, Musik, etc...)

Mit Hilfe der hier dargestellten Erfindung wird ein Smartphone zu einem tragbaren und gleichzeitig in Fahrzeugen nutzbaren Infotainmentsystem:
- Es kann auf bspw. sehr teure festverbaute Fahrzeug-Infotainmentsysteme verzichtet werden.
- Die Daten des Smartphones müssen nicht an ein eingebautes Schnittstellensystem übertragen werden.
- Teile des Systems und der Funktionalität des Smartphones müssen nicht für ein eingebautes Schnittstellensystem nachgebaut werden.
- Die hier dargelegte Erfindung ist mobil und kann von Fahrzeug zu Fahrzeug "mitgenommen" werden.
- Das Smartphone ist individuell an den Besitzer angepasst, ihm vertraut und enthält alle Daten - auch diese, die im Moment an bestehende Schnittstellensysteme (noch) nicht übertragen werden können.
- Das Smartphone kann komfortabel und gefahrlos von jedem Passagier (inkl. des Fahrers) des Fahrzeuges auch während der Fahrt bedient und genutzt werden.
- Mit Hilfe der perfekt aufeinander abgestimmten Komponenten (das Eingabegerät und die auf dem Smartphone ausgeführte Softwareapplikation) wird ein vollständiges Infotainmentsystem geschaffen.

Die vorliegende Erfindung stellt somit ein kostengünstiges Infotainmentsystem zur Verfügung, das die in einem handelsüblichen Smartphone verfügbaren vielfältigen Funktionen über bedienerfreundliche Schnittstellen in integrierter Weise mit direktem Zugriff zur Verfügung stellt, und so in einem Fahrzeug auch während der Fahrt leicht bedient werden kann.

### KURZE BESCHREIBUNG DER ZEICHNUNGEN

**Fig.** 1 stellt das tragbare Infotainmentsystem unter Berücksichtigung unterschiedlicher Positionierung des externen Eingabegerätes und des Smartphones im Fahrzeug Innenraum gemäß einer Ausführungsform der vorliegenden Erfindung dar.
**Fig.** 2 stellt das externe Eingabegerät gemäß einer Ausführungsform der vorliegenden Erfindung dar.
**Fig.** 3 ist ein Blockschaltbild einer ersten möglichen Ausbildung des externen Eingabegerätes von Fig. 2 und dessen Verbindung zu einem tragbaren Eingabegerät.
**Fig.** 4A beschreibt den Zusammenhang zwischen dem externen Eingabegerät, dem Smartphone und dessen Betriebssystem (bzw. dessen Module), der Module der Infotainment-Softwareapplikation und der Integration anderer Softwareapplikationen, die auf dem Smartphone ausgeführt werden, dar.
**Fig.** 4B zeigt eine Ausprägung eines Makro-Steuerbefehls bestehend aus der Abfolge von vier unterschiedlichen Signalen aus dem USB HID Profil.
**Fig.** 5A bis 5D stellen eine beispielhafte Darstellung der graphischen Benutzeroberfläche der Infotainment-Softwareapplikation dar.
**Fig.** 6 beschreibt beispielhaft, wie die Infotainment-Softwareapplikation auf den Nachrichtenspeicher des Betriebssystems des Smartphones zugreift, diesen graphisch darstellt und bedienbar macht, so wie die Groß-Darstellung bei der Auswahl einer einzelnen Nachricht.
**Fig. 7** stellt eine graphische Repräsentation des Zusammenspiels zwischen den Schnell-Zugriffs-Tasten des externen Eingabegerätes und der Softwareapplikation gemäß einer Ausführungsform der vorliegenden Erfindung dar.
**Fig.** 8 ist ein Entscheidungsbaum in Form eines Flussdiagramms, welches das Zusammenspiel zwischen den Schnell-Zugriffs-Tasten des externen Eingabegerätes und der Softwareapplikation gemäß einer Ausführungsform der vorliegenden Erfindung beschreibt.

### DETAILLIERTE BESCHREIBUNG DER ERFINDUNG

Eine Ausführungsform der vorliegenden Erfindung betrifft ein Infotainmentsystem, welches aus einem externen tragbaren Eingabegerät, einem Smartphone (oder einem tragbaren Endgerät gleicher Funktionalität, wie bspw. Tablet-PCs oder ähnliche Geräte) und einer auf dem Smartphone ausgeführten Softwareapplikation besteht.

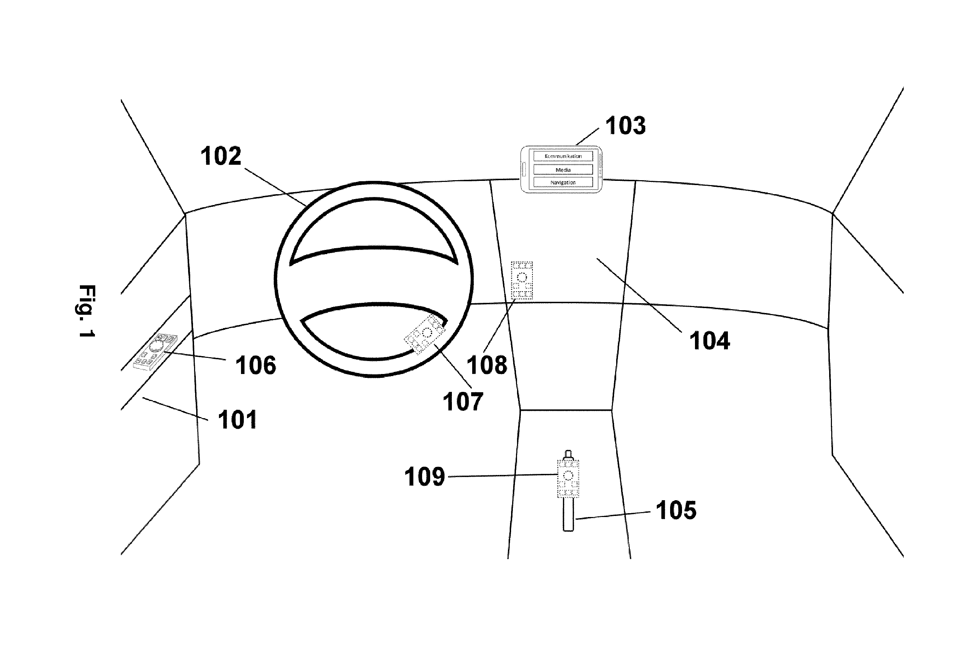

**Fig.** 1 zeigt mögliche Platzierungen des externen Eingabegerätes und des Smartphones im Inneren eines Fahrzeuges.

Die Platzierung des Eingabegerätes **106** kann so erfolgen, dass es der Benutzer, bspw. der Fahrer, ohne Beeinträchtigung seiner Aufmerksamkeit und ohne dass er den Blick von der Straße abwenden muss, bedienen kann. Das Eingabegeräte kann z.B. an der Tür-Innenseite **101,** am Lenkrad **102** - (sowohl oben, unten, links oder rechts; hier wurde die Position **107** schematisch dargestellt), im Bereich der Mittelkonsole **104** bspw. auf Höhe der anderen üblichen Bedienelemente, schematisch dargestellt durch **108,** an der Handbremse **105,** schematisch dargestellt durch **109,** oder einer beliebigen anderen Stelle angebracht werden.

Die Platzierung des Smartphones **103** im Fahrzeug-Innenraum kann in optimaler Weise so erfolgen, dass es vom Fahrer und/oder von den Passagieren auch während der Fahrt sichtbar ist, gleichzeitig jedoch das Sichtfeld auf die Straße nicht eingeschränkt wird. Das Smartphone kann außerhalb der Reichweite des Benutzers platziert werden, da die Smartphone eigenen Bedienelemente zu seiner Steuerung nicht genutzt werden müssen. Stattdessen lassen sich alle wichtigen Funktionsbereiche gemäß der vorliegenden Erfindung mit dem externen Eingabegerät bequem und sicher bedienen.

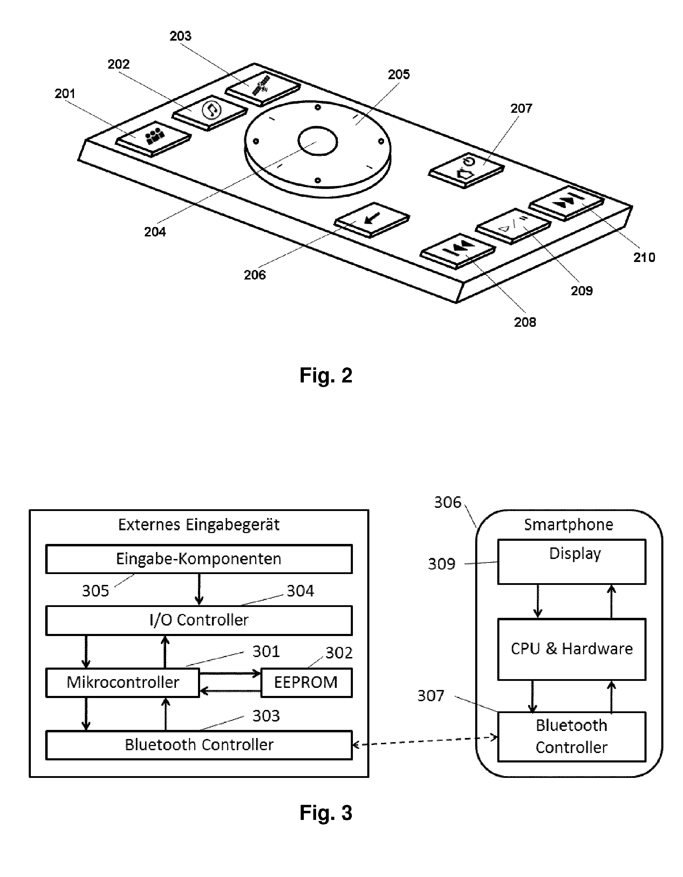

**Fig.** 2 stellt ein externes Eingabegerät gemäß einer Ausführungsform der vorliegenden Erfindung dar. Das Eingabegerät kann einen Gehäuseteil, Eingabe-Komponenten (wie bspw. Knöpfe, Tasten, Joysticks, Touchpads oder Dreh- und Schieberegler), elektronische Schaltungen, eine drahtlose Übertragungsschnittstelle, Beleuchtungs- und Status-LEDs und eine interne und/oder externe Stromversorgung umfassen.

In der bevorzugten Ausführungsform des erfindungsgemäßen tragbaren Infotainmentsystems ist das Eingabegerät in besonderer Weise mit der auf dem Smartphone ausgeführten Softwareapplikation abgestimmt. Dazu weist das Eingabegerät so genannte Schnell-Zugriffs-Tasten auf, nämlich direkt vom Benutzer bedienbare Eingabe-Elemente **201, 202** und **203,** die jeweils den wichtigsten Funktionsbereichen Kommunikation, Media und Navigation der Softwareapplikation zugeordnet sind. Über diese Schnell-Zugriffs-Tasten kann das Infotainmentsystem in der Weise gesteuert werden, dass im Smartphone der einer Schnell-Zugriffs-Taste entsprechende Bereich direkt aufgerufen werden kann. Abhängig vom aktuellen Systemzustand des Smartphones (bspw. laufende Navigations-Software oder ungelesene Kurz-Nachricht), wird nach Betätigung einer Schnell-Zugriffs-Taste direkt eine entsprechende Funktion aus dem entsprechenden Funktionsbereich auf dem Smartphone ausgeführt. Dies kann bedeuten, dass eine bestimmte Funktion ausgeführt wird, eine bestimmte Softwareapplikation gestartet oder in den Vordergrund geholt oder ein bestimmter Systemzustand hergestellt wird.

Die weiteren Eingabe-Komponenten des Eingabegerätes können sowohl zur Steuerung der Softwareapplikation des Infotainmentsystems oder einer anderen Softwareapplikation auf dem Smartphone, als auch zum Auslösen nativer Funktionen des Smartphones dienen. Unter einer nativen Funktion werden Grundfunktionen des Smartphones verstanden, die beispielsweise im Betriebssystem des Smartphones implementiert und nicht explizit mit einer bestimmten Softwareapplikation verknüpft sind.

Eine Ausgestaltung dieser Eingabe-Komponenten kann ein Steuerkreuz **205** sein, das zur Eingabe von richtungsabhängigen Steuerbefehlen verwendet werden kann. Bei der, in **Fig.** 2 gezeigten Ausgestaltung des Eingabegerätes, wird ein Steuerkreuz mit 8-Wege Steuerbefehlen und zusätzlichem Druck-Knopf zum Bestätigen **204** gezeigt. Der Druck-Knopf zum Bestätigen **204** kann in der Mitte des Steuerkreuzes **205** angebracht werden.

Im Zusammenspiel dieser Eingabe-Komponenten kann bspw. die Menü-Führung in einer Softwareapplikation des Smartphones umgesetzt werden. Die Auswahl von Menü-Punkten oder von Einträgen einer Liste können mit dem Steuerkreuz **205** ausgewählt und mit dem Druck-Knopf **204** bestätigt werden. Das Steuerkreuz kann aber auch zum verschieben, drehen oder heran- und herauszoomen von graphischen Darstellungen wie bspw. einer Karten-Ansicht genutzt werden.

Das externe Eingabegerät kann, wie in **Fig.** 2 dargestellt, eine Eingabe-Komponente **206,** bspw. einen Druck-Knopf, enthalten, welcher zum Senden des Befehls "Zurück" oder eines äquivalenten Befehls genutzt werden kann. Mit diesem Druck-Knopf **206** können Eingaben oder eine Auswahl in der Softwareapplikation rückgängig gemacht werden. Auch kann der Befehl "Zurück" zur Steuerung der Menü-Führung auf dem Smartphone verwendet werden, um bspw. in eine höhere Menü-Ebene zu navigieren.

Um native Funktionen des Smartphones zu steuern kann eine Ausgestaltung des Eingabegerätes Eingabe-Komponenten enthalten, die einige dieser nativen Funktionen auf dem Smartphone auslösen. Wie in **Fig.** 2 dargestellt, können das bspw. ein Druck-Knopf **207** sein, der bei einfachem Drücken - also normal schnellem Drücken - die native Funktion "Home" (das tragbare Endgerät wechselt zu seinem Home-Screen oder Desktop), bei längerem Gedrückt-Halten die native Funktion "System Power" auslöst.

Weitere Eingabe-Komponenten, die native Funktionen auf dem Smartphone auslösen, können die Druck-Knöpfe **208,** zum Auslösen der Funktion "vorheriger Titel", **209,** zum Auslösen der Funktion "Wiedergabe/Pause" und **210,** zum Auslösen der Funktion "nächster Titel" bei der Wiedergabe von Medien sein.

**Fig.** 3 beschreibt den schematischen Aufbau des externen Eingabegerätes und dessen Kommunikationsschnittstelle mit dem Smartphone. Diese schematische Darstellung des Smartphones zeigt nur die relevanten Komponenten.

Das Eingabegerät enthält im Wesentlichen einen Mikrocontroller **301,** eine nicht volatile Speichereinheit (EEPROM) **302,** einen Bluetooth Controller **303,** einen Eingabe / Ausgabe Controller (kurz I/O Controller) **304** und eine Mehrzahl von Eingabe-Komponenten **305.** Die Komponenten **301, 302, 303** und **304** können auch integriert auf einem einzelnen Mikroprozessor untergebracht sein.

Auf dem nicht-flüchtigen Speicher **302** ist der Programmcode des externen Eingabegerätes hinterlegt. Beim Startvorgang des Gerätes wird dieser in den Arbeitsspeicher des Mikrocontrollers transferiert und kommt dort zur Ausführung.

Der Bluetooth Controller **303** übernimmt die Kommunikation nach einem der herkömmlichen Bluetooth-Protokolle mit dem Smartphone **306,** in welchem ebenfalls ein Bluetooth Controller **307** verbaut ist. Sind die beiden Geräte Smartphone und externes Eingabegerät einander bekannt, kann direkt mit der Kommunikation begonnen werden, anderenfalls müssen die Geräte erst gekoppelt werden.

Zur Datenübertragung zwischen dem externen Eingabegerät und dem Smartphone wird auf das Human Interface Device - Profil (kurz HID - Profil) zurückgegriffen. Dieses Profil des Bluetooth Standards legt die Art und Weise der Kommunikation zwischen Geräten und den möglichen Kommunikationsumfang fest. Je nach Ausgestaltung kann auch ein anderes Profil zur Datenübertragung gewählt werden (zum Beispiel Serial Port Profile kurz SPP zur seriellen Datenübertragung oder andere).

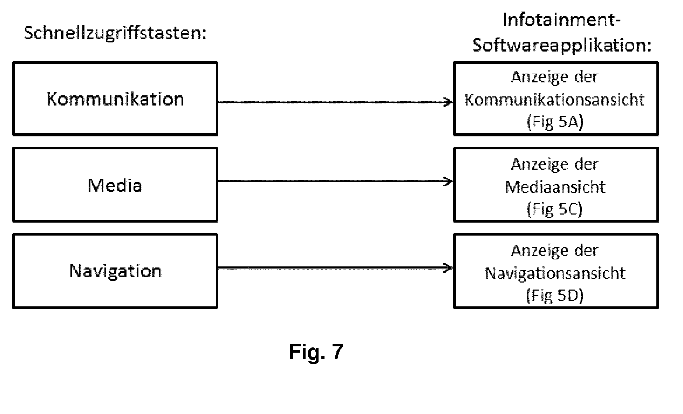

Wird eine der Eingabe-Komponenten **305** betätigt, so wird dies vom I/O Controller **304** registriert und zur weiteren Verarbeitung an den Mikrocontroller **301** weitergeleitet. Von dort wird das zusammengestellte Datenpaket an den Bluetooth Controller **303** übertragen, der die Nachricht dann drahtlos an den Bluetooth Controller **307** des Smartphones **306** überträgt. Im Smartphone wertet eine dem externen Eingabegerät zugeordnete Softwareapplikation die empfangene Nachricht aus und veranlasst, dass das Smartphone die der Nachricht entsprechende Aktion ausführt und ggf. über das Display **309** visualisiert (siehe zum Beispiel **Fig.** 7).

Um wie oben beschrieben ein Smartphone als tragbares Infotainmentsystem nutzen zu können, würde ein externes Eingabegerät, welches bspw. nur Eingabe-Komponenten zur Steuerung nativer Funktionen des Smartphones aufweist, nicht ausreichen. Ein essentieller Teil der hier beschriebenen Erfindung ist daher eine Softwareapplikation, die auf dem Smartphone ausgeführt wird, um die verschiedenen Funktionsbereiche in einen logischen Zusammenhang zu bringen und damit einen benutzerfreundlichen Wechsel zwischen den Funktionsbereichen durch den Empfang der Schnell-Zugriffs-Tasten (**201, 202** und **203**) des externen Eingabegerätes zu ermöglichen.

Die Integration der verschiedenen Funktionsbereiche kann von der Softwareapplikation (im Folgenden Infotainment-Softwareapplikation genannt) in unterschiedlicher Weise implementiert werden:
- In einer möglichen Ausgestaltung führt die Infotainment-Softwareapplikation die wichtigsten Funktionen vollständig selbst durch. Beispielsweise werden dabei für Kommunikation, Media und Navigation, alle relevanten Arbeitsschritte, Anzeigen und graphischen Darstellungen, die Verarbeitung aller relevanten Eingabesignale und das Empfangen und Auswerten von externen Informationsquellen (bspw. Internet-, GPS- und andere Funk-Daten) in der Applikation implementiert.
- In einer bevorzugten Ausgestaltung stellt die Infotainment-Softwareapplikation die zuvor beschriebene Funktionalität in einer Form bereit, dass native Funktionen des Betriebssystems des Smartphones und andere auf dem Smartphone vorhandene Softwareapplikationen entsprechend aktiviert und gesteuert werden. So kann bspw. die Navigationssoftware (Darstellung von Karten und Schritt-für-Schritt-Navigation) als auf dem Smartphone vorhandene Applikation betrieben werden, die Telefonfunktion dagegen kann bspw. vom Betriebssystem des Smartphones selbst zur Verfügung gestellt werden. Die Integration beider Funktionalitäten wird mittels der Infotainment-Softwareapplikation durchgeführt.

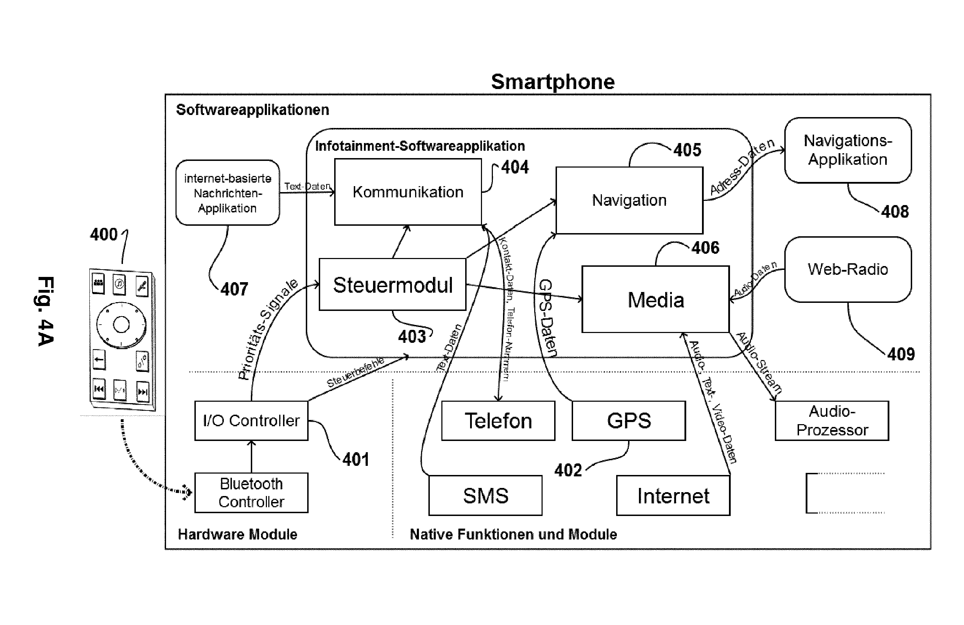

In **Fig.** 4A ist dargestellt, wie die Infotainment-Softwareapplikation auf Module des Betriebssystems eines Smartphones (= Bereiche nativer Funktionalität, wie bspw. der GPS-Empfänger **402**) zugreift, dem Modul entsprechende Daten abgreift und diese in entsprechenden Funktionsbereichen (**404, 405** und **406**) der Infotainment-Softwareapplikation verarbeitet. Bspw. können die Daten des GPS-Empfängers (Modul GPS **402**) genutzt werden um eine Routenführung durchzuführen, die Position des Smartphones - und damit des Fahrzeugs - auf einer Karte darzustellen oder die aktuelle Geschwindigkeit zu berechnen und anzuzeigen.

Neben der Verwendung von Funktionen des Betriebssystems können in einer Ausprägung der Infotainment-Softwareapplikation auch andere Softwareapplikationen, die auf dem Smartphone vorhanden sind, genutzt werden, um ein integriertes Infotainmentsystem zu erzeugen. Wie in **Fig.** 4A dargestellt können bspw. Text-Daten von einer Softwareapplikation **407,** die einen Nachrichten-Versand über das Intemet-Protokoll ermöglicht, genauso wie Audio-Daten von bspw. einer Intemet-Radio-Applikation **409** abgegriffen und angezeigt werden.

Darüber hinaus kann in einer Ausprägung der Infotainment-Softwareapplikation Funktionalität, die dem Betriebssystem nicht nativ ist, in der Form ausgelagert werden, als dass bspw. die Routenführung von einer anderen Softwareapplikation durchgeführt wird, als der Infotainment-Softwareapplikation selbst. Die Infotainment-Softwareapplikation übergibt dafür der Navigations-Applikation **408** die Adress-Daten zur Routenführung.

In einer weiteren Ausführungsvariante der Infotainment-Softwareapplikation enthält diese neben den Funktionsbereichen Kommunikation, Media und Navigation, den Funktionsbereich Fahrzeuginformationen. Dieser Funktionsbereich wird nicht, wie die anderen Funktionsbereiche mit Informationen (Text-Daten, Audio-Daten, etc.) des tragbaren Endgerätes gespeist, sondern mit Daten des Fahrzeuges. Diese Daten können über verschiedene Wege aus dem System des Fahrzeuges ausgelesen werden (bspw. über eine Schnittstelle an die Bus-Systeme CAN, LIN, MOST, Flexray oder Ethernet des Fahrzeuges) oder aus dem universellen ODB2-Port, den moderne Fahrzeuge mittlerweile zur Verfügung stellen. Die Daten, die aus dem Fahrzeug ausgelesen werden, können unter anderem sein:
- Aktuelle Geschwindigkeit
- Aktuelle Drehzahl des Motors
- Aktueller Verbrauch
- Durchschnittlicher Verbrauch
- Füllstand des Kraftstofftanks
- Reifendruck
- Fehlermeldung des Fahrzeugsystems

In einer möglichen Ausprägung werden die Fahrzeugdaten über eine Kabelverbindung zwischen dem Fahrzeug und dem externen Eingabegerät ausgelesen. In diesem Fall sendet das externe Eingabegerät die Daten, die es über die Kabelverbindung aus einem Bus-System oder dem ODB2-Port ausliest, über seine drahtlose Verbindungsschnittstelle an das tragbare Endgerät weiter, wo sie von der Infotainment-Softwareapplikation im Funktionsbereich Fahrzeuginformationen verarbeitet und angezeigt werden.

In einer weiteren Ausprägung wird ein separates externes Gerät verwendet. Dieses Gerät verfügt selbst über eine drahtlose Verbindungsschnittstelle zum tragbaren Endgerät. Es liest Daten aus einem Bus-System oder dem ODB2-Port aus und sendet diese direkt an das tragbare Endgerät zur Verarbeitung und Anzeige in der Infotainment-Softwareapplikation (bspw. im Funktionsbereich Fahrzeuginformationen).

Entscheidend für die Benutzerfreundlichkeit des erfindungsgemäßen Infotainmentsystems in jeder Ausprägung ist, dass der Wechsel zwischen seinen einzelnen Funktionsbereichen mit Hilfe der Schnell-Zugriffs-Tasten unmittelbar erfolgt - auch wenn die Infotainment-Softwareapplikation native Funktionalität und andere Softwareapplikationen im Smartphone nutzt. Die Integrationsleistung des Infotainmentsystems darf dabei nicht beeinträchtigt werden.

Es muss daher sichergestellt werden, dass unabhängig vom Systemzustand des Smartphones, die Signale der Schnell-Zugriffs-Tasten (**201, 202** und **203**) des externen Eingabegerätes jeder Zeit an die Infotainment-Softwareapplikation weitergeleitet werden. Eine Infotainment-Softwareapplikation, die auf einem tragbaren Endgerät ausgeführt wird, muss daher zur Laufzeit auf dem tragbaren Endgerät dauerhafte Priorität besitzen.

Dauerhafte Priorität wird dabei wie folgt definiert: Ein oder mehrere Steuersignale des externen Eingabegerätes werden unabhängig vom aktuellen Systemzustand (d.h. unabhängig von den aktiven Prozessen des Betriebssystems oder anderer Applikationen) immer an die Infotainment-Softwareapplikation weitergeleitet. Beim Empfang eines dieser speziellen Steuersignale vom externen Eingabegerät (im folgenden Prioritäts-Signale genannt) wird der Infotainment-Softwareapplikation vom Betriebssystem eine erhöhte Priorität in der Verarbeitung eingeräumt.

Der bisherige Stand der Technik löst diese Aufgabe wie folgt: Infotainmentsysteme bestehen aus einem festverbauten oder tragbaren Endgerät zur Anzeige und Ausführung der Funktionalität und den Eingabekomponenten des Systems, welche entweder auf dem Endgerät selbst, oder auf einem externen Eingabegerät ausgeformt sind. Das Betriebssystem und die enthaltene Softwareapplikation eines solchen Infotainmentsystems haben ausschließlich die Aufgabe, die Funktionalität des Infotainments zur Verfügung zu stellen. Da das Infotainmentsystem keine weitere Funktionalität bereitstellt, kann der Infotainment-Softwareapplikation immer die notwendige dauerhafte Priorität eingeräumt werden.

Die hier ausgeführte Erfindung ermöglicht es im Gegensatz zu diesen einseitigen Infotainmentsystemen, jedes tragbare Endgerät als Infotainmentsystem in Fahrzeugen zu nutzen, welches die Funktionsbereiche Kommunikation, Media und Navigation beherrscht. Das können somit handelsübliche Smartphones oder Tablet-PCs sein, wie sie bspw. von Herstellern wie Samsung oder HTC Corp. gefertigt werden. Diese Geräte besitzen eine Vielzahl unterschiedlicher Funktionen und können eine sehr große Zahl an unterschiedlichen Softwareapplikationen ausführen. Um auf einem solchen vielseitigen Endgerät dauerhafte Priorität für die Infotainment-Softwareapplikation der vorliegenden Erfindung zu ermöglichen, müssen einige Punkte beachtet werden.

Auf handelsüblichen Smartphones können leicht über hundert Softwareapplikationen enthalten sein. Daher muss das Betriebssystem dafür Sorge tragen, dass die Übersichtlichkeit und Bedienbarkeit durch den Benutzer gewährleistet bleibt. Dies geschieht dadurch, dass immer nur eine, die im Moment im Vordergrund sichtbare, Applikation Priorität besitzt, sprich vom Benutzer bedienbar ist und auf Eingaben von externen Steuergeräten (bspw. eine Maus oder eine Tastatur) reagiert. Diese Art der Priorität, bedingt durch den aktiven Status der Applikation im Vordergrund, wird im Folgenden als flüchtige Priorität bezeichnet. Bei geplanten oder ungeplanten Ereignissen (bspw. ein Telefonanruf, ein Alarm, eine Nachricht, etc.) wird die aktive Applikation durch die Applikation, die dieses Ereignis ausgelöst oder empfangen hat, abgelöst. Damit verliert die ursprünglich aktive Applikation ihre Priorität und lässt weder an Hand der nativen, noch der Steuermittel eines externen Eingabegerätes bedienen.

Im Gegensatz zur flüchtigen Priorität, die bei handelsüblichen Smartphones bei der Ausführung von Softwareapplikationen genutzt wird, wird der Infotainment-Softwareapplikation in der hier vorliegenden Erfindung dauerhafte Priorität durch folgende Schritte ermöglicht:
Das Betriebssystem des Smartphones stellt mindestens ein so genanntes Prioritäts-Signal zur Verfügung. Dieses Prioritäts-Signal kann von dem externen Eingabegerät an das Smartphone gesendet werden. Das Betriebssystem ermöglicht die Verknüpfung des empfangenen Prioritäts-Signals mit einer bestimmten Softwareapplikation oder eines Services und leitet das Prioritäts-Signal unabhängig vom aktuellen Systemzustand (d.h. unabhängig von den laufenden Prozessen des Betriebssystems und anderer Applikationen) immer an die Infotainment-Softwareapplikation weiter, um dort ein Steuermodul zu starten.

Dem Prioritäts-Signal folgen weitere Signale, um gewisse Funktionen auf dem tragbaren Endgerät mit Priorität auszulösen. Das Steuermodul **403** der Infotainment-Softwareapplikation hat die Aufgabe, die Folge-Signale auszuwerten und entsprechende Funktionen auszulösen. Das Steuermodul muss die Funktionalität des Infotainments (Kommunikation, Media und Navigation) nicht selbst zur Verfügung stellen. Das Steuermodul kann als eigenständige Applikation, als Teil der Infotainment-Softwareapplikation implementiert oder als Service am Betriebssystem registriert werden.

In **Fig.** 4A ist eine Ausprägung dieses Steuermoduls **403** als Teil der Infotainment-Softwareapplikation dargestellt. Das externe Eingabegerät **400** sendet Steuersignale an den Bluetooth-Controller des Smartphones. Handelt es sich dabei um einfache Steuerbefehle (z.B. ausgelöst durch eine Taste **205** des externen Eingabegeräts), werden diese vom Betriebssystem (bspw. über den I/O Controller des Smartphones **401**) an die Infotainment-Softwareapplikation weitergeleitet. Dies ist z.B. bei der Steuerung der Menü-Führung der Fall.

Handelt es sich bei einem Steuersignal, welches das externe Eingabegerät an das Smartphone sendet, um ein Prioritäts-Signal mit Folgesignalen (z.B. ein Signal der Schnellzugriffs-Tasten), so aktiviert das Betriebssystem (bspw. über den I/O Controller **401**) das Steuermodul **403.** Die Folge-Signale werden anschließend von dem aktiven Steuermodul empfangen und verarbeitet. Eine solche Abfolge von Prioritäts-Signal und Folge-Signalen wird im Folgenden als Makro-Steuersignal bezeichnet.

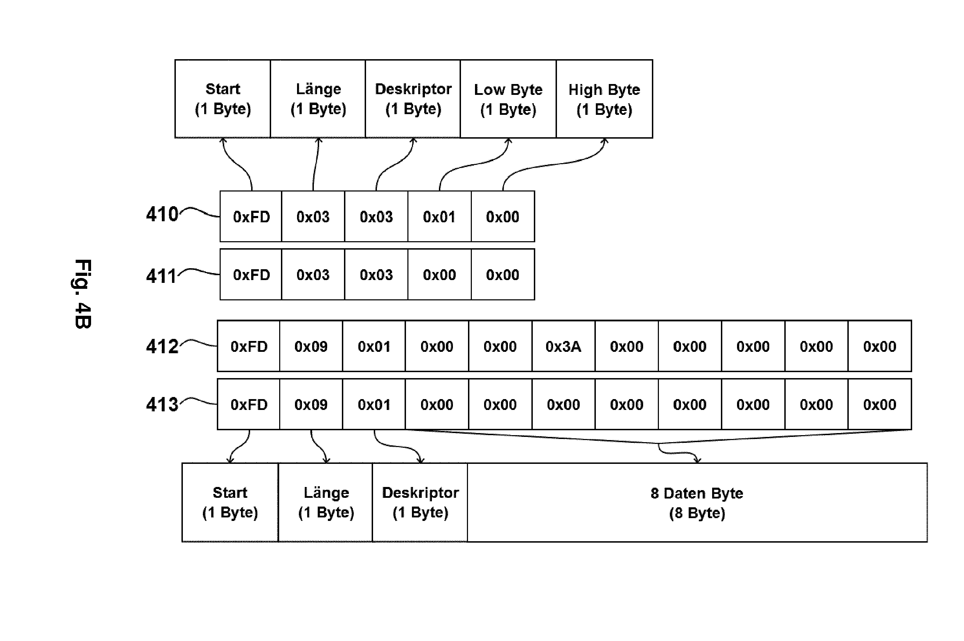

**Fig.** 4B beschreibt eine mögliche Ausprägung eines solchen Makro-Steuersignals, dass beim Betätigen einer Schnell-Zugriffs-Taste, hier Kommunikation **201,** gesendet wird. Das Makro-Signal wird entsprechend der Eingabe im externen Eingabegerät nach dem USB HID Profil erzeugt und simuliert eine Abfolge von Tasten-Druckvorgängen :
1. Drücken und Loslassen einer Taste, die der so genannte "Consumer Key Function - Home" Funktion entspricht. Dies entspricht dem Prioritäts-Signal **410** und dem Freigeben des Prioritäts-Signals **411.**
2. Drücken und Loslassen einer Taste zur Auswahl des Funktionsbereiches Kommunikation in der Infotainment-Softwareapplikation. Dies kann ein beliebiges Steuersignal sein, in diesem Beispiel handelt es sich um die Funktionstaste "F1" **412** einer Tastatur. Wie das Prioritäts-Signal muss dieses zunächst gesendet und dann durch ein entsprechendes Signal **413** wieder freigegeben werden.

Abhängig vom Betriebssystem und der Hardware des verwendeten tragbaren Endgerätes kann es notwendig sein, dass die im externen Eingabegerät erzeugten Signale, welche das Drücken der Funktionstaste "F1" simulieren, erst nach einer gewissen Wartezeit oder auch mehrfach gesendet werden müssen. Dies ist vor allem dann der Fall, wenn das Betriebssystem nach Empfang des Prioritäts-Signals die Aktivierung des Steuermoduls der Infotainment-Softwareapplikation nicht zeitnah ausführen kann. In diesem Fall wäre das Steuermodul noch nicht gestartet, um das Folge-Signal (simulierte Funktionstaste "F1") des Makro-Steuersignals zu empfangen. Dieses Problem kann durch eine Zeitverzögerung oder ein mehrfaches Senden umgangen werden.

Mit Hilfe dieser Makro-Signale (Prioritäts-Signal gekoppelt mit Folge-Signalen) wird der Infotainment-Softwareapplikation durch Nutzung des Steuermoduls auf multifunktionalen tragbaren Endgeräten (bspw. handelsübliche Smartphones) dauerhafte Priorität gewährleistet. Zu jeder Zeit reagiert das Smartphones damit auf das Betätigen der Schnell-Zugriffs-Tasten (**201, 202** und **203**).

Die Infotainment-Softwareapplikation bringt die verschiedenen Funktionsbereiche des Infotainmentsystems der Erfindung in einen logischen Zusammenhang und ermöglicht gleichzeitig den benutzerfreundlichen Wechsel zwischen den Funktionsbereichen durch Betätigen der Schnell-Zugriffs-Tasten (**201, 202** und **203**) des externen Eingabegerätes. Um dem Benutzer diesen logischen Zusammenhang auch visuell darzustellen, erzeugt die Infotainment-Softwareapplikation eine integrierte grafische Bedienoberfläche, welche der Benutzer bequem und sicher mittels des externen Eingabegerätes auch während der Fahrt bedienen kann.

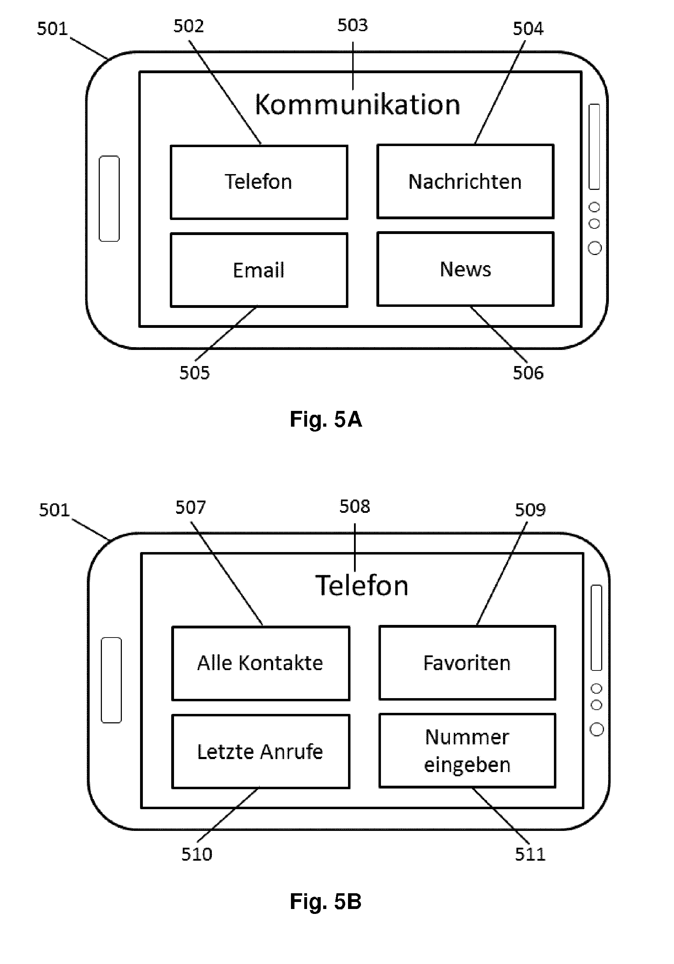

**Fig.** 5A bis 5D zeigen eine mögliche - grafisch sehr einfache - integrierte grafische Bedienoberfläche des Infotainmentsystems auf dem Smartphone **501.**

**Fig.** 5A zeigt die Ansicht des Funktionsbereiches Kommunikation **503.** Diese Ansicht wird beim Drücken der entsprechenden Schnell-Zugriffs-Taste des externen Eingabegeräts aufgerufen; die Ansicht kann alternativ auch aus einer höheren Hierarchiestufe der Infotainment-Softwareapplikation aufgerufen werden. Mögliche Sub-Kategorien dieses Funktionsbereichs Kommunikation sind in dieser Ausprägung die Kategorien (bzw. Funktionalitäten): Telefonfunktionen **502,** Nachrichten (bspw. Text-Nachrichten: SMS) anzeigen **504,** Email anzeigen **505** und News (= aktuelle Meldungen) anzeigen **506.**

**Fig.** 5B zeigt die Ansicht der Subkategorie Telefon **508** des Funktionsbereiches Kommunikation von Fig. 5A. Mögliche Sub-Kategorien dieser Sub-Kategorie sind in dieser Ausprägung die Kategorien (bzw. Funktionalitäten): Alle Kontakte anzeigen **507,** Favoriten der Kontakte anzeigen **509,** Anzeigen der letzten Anrufe **510** und die Möglichkeit eine Telefonnummer direkt einzugeben **511.**

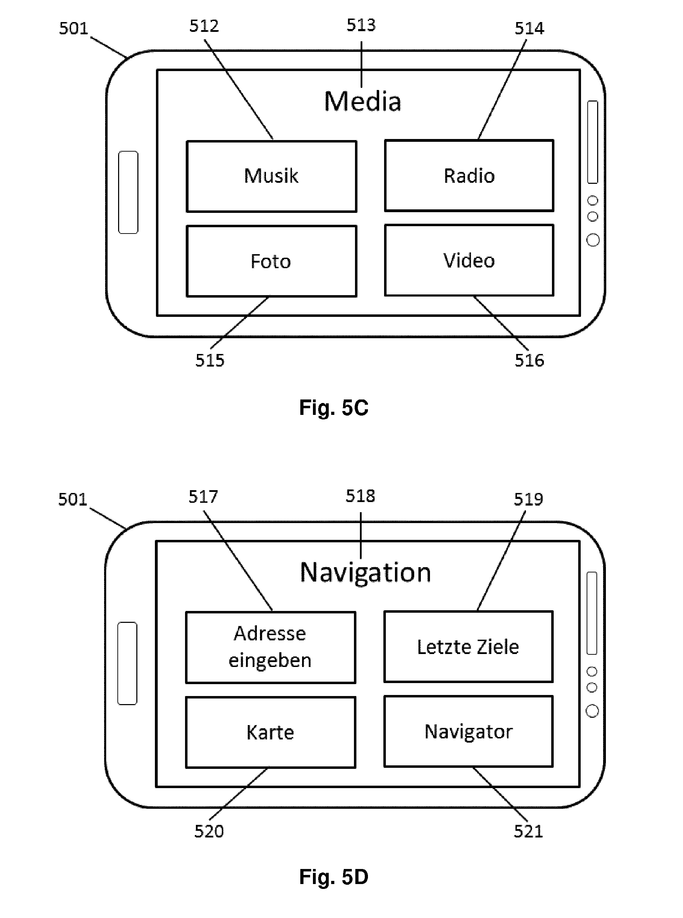

**Fig.** 5C zeigt die Ansicht des Funktionsbereiches Media **513.** Mögliche Sub-Kategorien dieses Funktionsbereichs sind in dieser Ausprägung die Kategorien (bzw. Funktionalitäten): Auswahl und Wiedergabe von Musik **512,** Auswahl und Wiedergabe von Radio-Stationen **514,** Fotos anzeigen **515** und Videos abspielen **516.**

**Fig.** 5D zeigt die Ansicht des Funktionsbereiches Navigation **518.** Mögliche Sub-Kategorien dieses Funktionsbereiches sind in dieser Ausprägung die Kategorien (bzw. Funktionalitäten): Eingabe einer Adresse oder Auswahl einer Adresse aus der Adress-Datenbank als Ziel der Navigation **517,** Anzeige der Adressen, zu denen in letzter Zeit eine Routenführung durchgeführt wurde **519,** Karte mit eigener GPS bestimmter Position anzeigen **520** und öffnen des Navigators, welcher die Schritt-für-Schritt Routenführung darstellt **521.**

Unabhängig von der Ausgestaltung der Infotainment-Softwareapplikation ist diese in Darstellung und Menüführung auf den Kontext des Fahrens in einem Kraftfahrzeug ausgelegt. Einfachheit und Klarheit in der Visualisierung von Aktionen und Reaktionen der Software haben oberste Priorität. Im Gegensatz zu Software, die für andere Kontexte (bspw. andere Alltagssituationen) ausgelegt ist, wird auf eine hohe Informationsflut, eine große Anzahl visueller Komponenten und eine komplexe Bedienung verzichtet.

Eine mögliche Ausgestaltung der Infotainment-Softwareapplikation kann die Menü-Führung in der Form umsetzen, dass bei Eingaben über das Steuerkreuz des externen Eingabegerätes eine visuelle Reaktion im aktiven Menü oder der aktiven Liste in der Software hervorgerufen wird. Bspw. wird beim Betätigen der Steuerkreuz-Taste "Hoch" der Menü- oder Listen-Eintrag, der über dem momentan ausgewählten Eintrag liegt, ausgewählt, der zuvor aktive Eintrag wird deaktiviert. Aktivierung und Deaktivierung beziehen sich dabei auf eine visuelle Hervorhebung (bspw. durch eine helle Umrandung) des Menü- oder Listen-Eintrages.

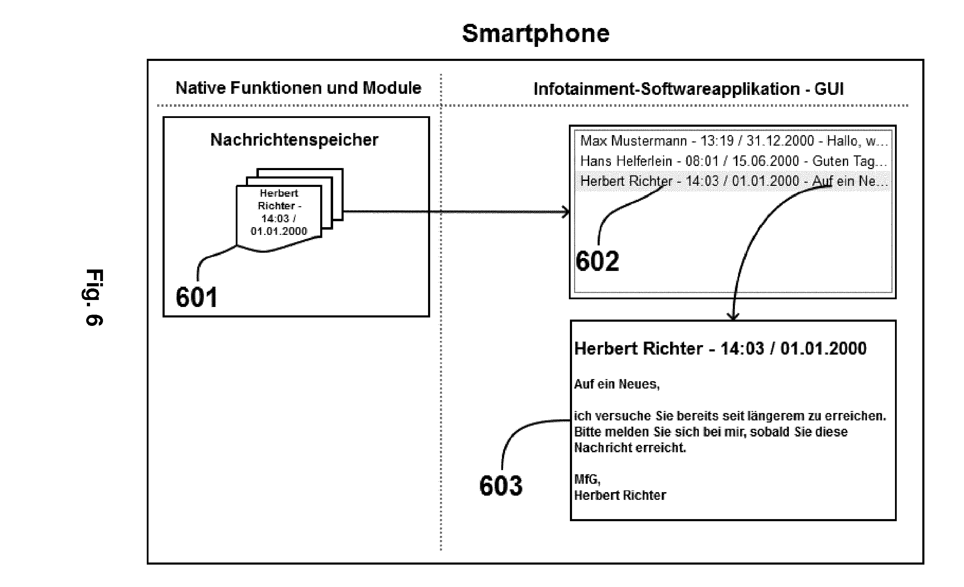

**Fig.** 6 zeigt eine Ausprägung der graphischen Darstellung von einer Liste von Text-Nachrichten, die die Infotainment-Softwareapplikation aus dem Nachrichtenspeicher **601** des Betriebssystems ausgelesen hat. Eine mögliche Menüführung innerhalb einer solchen Darstellung ist, dass mittels des Steuerkreuzes **205** des Eingabegerätes in **Fig.** 2 die Text-Nachricht **602** ausgewählt wird (erkennbar am Hintergrund des Listen-Eintrages **602**). Beim Betätigen des Bestätigungs-Knopf **204** des externen Eingabegerätes in **Fig.** 2, ändert sich die Darstellung der grafischen Bedienoberfläche: Es wird die ausgewählte Text-Nachricht **602** auf dem gesamten Bildschirm und in ganzer Länge **603** angezeigt.

Das Infotainmentsystem gemäß der Erfindung kann in einer möglichen Ausgestaltung nicht nur über das externe Eingabegerät, sondern auch mit den Eingabekomponenten des Smartphones selbst bedienbar sein. In jedem Fall ist die Bedienbarkeit der Infotainment-Softwareapplikation mittels des externen Eingabegerätes eine Grundvoraussetzung, um mit dem Smartphone, der Infotainment-Softwareapplikation und dem externen Eingabegerät eine tragbares Infotainment-System zu bilden.

Neben der technischen Ausprägung der Schnell-Zugriffs-Tasten auf dem externen Eingabegerät (siehe **Fig.** 4A und 4B), ist auch die visuelle und funktionale Ausprägung der durch die Schnell-Zugriffs-Tasten ausgelösten Reaktion der Infotainment-Softwareapplikation entscheidend. In **Fig.** 4A ist dargestellt, dass das Steuermodul nach Empfang des Prioritäts-Signals einen beliebigen Funktionsbereich (**404, 405** und **406**) aufrufen kann.

**Fig.** 7 beschreibt das Verhalten der Infotainment-Softwareapplikation beim Betätigen der Schnell-Zugriffs-Tasten und dem Aufruf des Funktionsbereiches durch das Steuermodul 403. Beim Betätigen der Schnell-Zugriffs-Taste Kommunikation **201** auf dem externen Eingabegerät in **Fig.** 2 wird über das Steuermodul **403** die Kommunikationsansicht **Fig.** 5A, beim Betätigen der Schnell-Zugriffs-Taste Media **202** wird die Mediaansicht **Fig.** 5C, beim Betätigen der Schnell-Zugriffs-Taste Navigation **203** wird die Navigationsansicht **Fig.** 5D in der Infotainment-Softwareapplikation angezeigt.

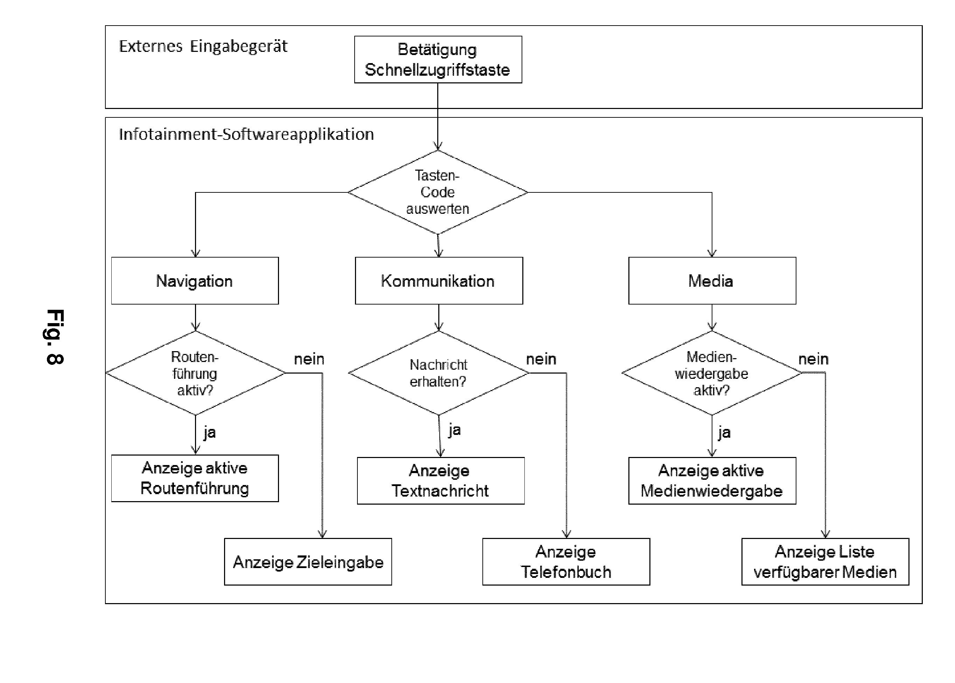

**Fig.** 8 beschreibt ein weiterführendes Verhalten der Infotainment-Softwareapplikation bei der Auswertung der durchzuführenden Aktion, wenn der Benutzer eine der zuvor genannten Schnell-Zugriffs-Tasten betätigt. Die Anzeige der entsprechenden Ansicht innerhalb der Infotainment-Softwareapplikation ist dabei nur eine von vielen Möglichkeiten. Durch die Auswertung des aktuellen Zustands des Systems oder anderer Applikationen (bspw. aktive Routenführung, ungelesene Nachrichten, aktuelle Geschwindigkeit) können eine beliebige Anzahl von Aktionen aus dem entsprechenden Funktionsbereich der Infotainment-Softwareapplikation durchgeführt werden. Eine Mögliche Ausprägung ist dabei, dass das Steuermodul **403** diese Auswertung trifft, oder nur den Funktionsbereich (**404, 405** und **406**) aufruft und die Auswertung dann im Funktionsbereich selbst durchgeführt wird.

Weiterführende Auswertungen können bspw. so gestaltet sein, dass beim Aufruf des Funktionsbereiches Kommunikation von der Infotainment-Softwareapplikation geprüft wird, ob ungelesene Nachrichten im System (bspw. eine Text-Nachricht) vorliegen und diese direkt angezeigt oder ab einer gewissen Fahrzeug-Geschwindigkeit automatisch vorgelesen werden. Beim Aufruf des Funktionsbereiches Media kann die Infotainment-Softwareapplikation bspw. prüfen, ob zurzeit eine Medienwiedergabe ausgeführt wird und daraufhin den entsprechenden Medien-Player anzeigen. Liegt keine aktive Medienwiedergabe vor, so kann bspw. die Ansicht zur Auswahl von Media-Daten geöffnet werden. Beim Aufruf des Funktionsbereiches Navigation kann die Infotainment-Softwareapplikation bspw. prüfen, ob bereits eine Routenführung aktiv ist und diese direkt anzeigen. Liegt keine aktive Routenführung vor, so könnte bspw. die Zieleingabe der Navigation angezeigt werden.

Das Verhalten der Infotainment-Softwareapplikation in Bezug auf die Schnell-Zugriffs-Tasten kann durch den Benutzer in den Einstellungen Applikation konfigurierbar sein. Es ist möglich zu jeder Schnell-Zugriffs-Taste eine Auswahl möglicher Aktionen und/oder Prüfungen zur Auswahl durch den Benutzer anzubieten. Zum Beispiel kann in den Einstellungen eine Auswahl getroffen werden, ob beim Betätigen der Schnell-Zugriffs-Taste Navigation direkt zu einer aktiven Routenführung gewechselt werden soll, oder unabhängig von einer aktiven Routenführung immer die Zieleingabe der Navigation geöffnet wird. Die verschiedenen Optionen können dem Benutzer bspw. in Form eines Menüs zur Auswahl dargestellt werden.

Die zur Auswahl stehenden Aktionen, die durch den Benutzer den Schnell-Zugriffs-Tasten zuordenbar sind, werden in der Infotainment-Softwareapplikation hinterlegt. Wählt der Benutzer eine bestimmte Aktion aus und ordnet er diese einer bestimmten Schnell-Zugriffs-Taste zu, so wird diese Auswahl in der Infotainment-Softwareapplikation gespeichert. Drückt der Benutzer anschließend auf die entsprechende Schnell-Zugriffs-Taste, löst die Infotainment-Softwareapplikation die nun zu dieser Taste hinterlegte Aktion aus.

## Patentansprüche

1. Infotainmentsystem für ein Fahrzeug, enthaltend:
ein tragbares Endgerät (103) mit mindestens den Funktionsbereichen Kommunikation, Media und Navigation und einer Drahtlos-Schnittstelle (307) zur drahtlosen Verbindung mit anderen Geräten;
ein externes Eingabegerät (106), das über die Drahtlos-Schnittstelle mit dem tragbaren Endgerät verbindbar ist und mindestens Bedienteile (201, 202, 203) aufweist, die jeweils einem der Funktionsbereiche des tragbaren Endgeräts zugeordnet sind, sowie Mittel (303) zur Übertragung von Steuersignalen, die jeweils einem Bedienteil zugeordnet sind,
wobei das tragbare Endgerät Steuermittel (403) aufweist, um die den Bedienteilen zugeordneten Steuersignale zu empfangen und die Ausführung einer Funktion im zugeordneten Funktionsbereich zu steuern.

2. Infotainmentsystem nach Anspruch 1, worin das tragbare Endgerät Mittel (404, 405, 406) aufweist, die jeweils einem der Funktionsbereiche zugeordnet und dazu eingerichtet sind, vom Steuermittel aktiviert zu werden, um native Funktionen und Applikationen des tragbaren Endgeräts zu steuern.

3. Infotainmentsystem nach Anspruch 1 oder 2, worin das tragbare Endgerät dazu eingerichtet ist, dem Steuermittel eine hohe Ausführungspriorität zuzuweisen.

4. Infotainmentsystem nach einem der Ansprüche 1 bis 3, worin das tragbare Endgerät eine grafische Bedienoberfläche für jeden Funktionsbereich aufweist, die durch Bedienelemente des externen Eingabegeräts steuerbar ist.

5. Infotainmentsystem nach einem der Ansprüche 1 bis 4, worin der Funktionsbereich Kommunikation mindestens eine von Telefonfunktion, Anzeige und Versand von Text- oder Audio-Nachrichten und internet-basierte Kommunikation zur Verfügung stellt.

6. Infotainmentsystem nach einem der Ansprüche 1 bis 5, worin der Funktionsbereich Media die Ausgabe von Media-Daten in Form von mindestens eine von Audio-, Foto- und Video-Daten zur Verfügung stellt.

7. Infotainmentsystem nach einem der Ansprüche 1 bis 6, worin der Funktionsbereich Navigation die navigations-relevante Funktionalität zur Verfügung stellt.

8. Infotainmentsystem nach einem der Ansprüche 1 bis 7, worin ein weiterer Funktionsbereich Fahrzeuginformation fahrzeugrelevante Daten über das externe Eingabegerät zur Verfügung stellt.

9. Infotainmentsystem nach einem der Ansprüche 1 bis 8, worin der mit einem zugeordneten Bedienelement aufgerufene Funktionsbereich unter Auswertung des Systemzustandes eine beliebige Funktion innerhalb des Funktionsbereichs auslöst.

10. Infotainmentsystem nach einem der Ansprüche 1 bis 9, worin die Bedienteile durch den Benutzer in Bezug auf die zugeordnete Funktion konfigurierbar sind.

11. Infotainmentsystem nach einem der Ansprüche 1 bis 10, worin das tragbare Endgerät ein Smartphone oder ein tragbares Gerät gleicher Funktionalität ist.

12. Infotainmentsystem nach einem der Ansprüche 1 bis 11, worin die Drahtlos-Schnittstelle eine Bluetooth-Schnittstelle ist

13. Externes Eingabegerät zur drahtlosen Steuerung eines tragbaren Endgeräts, insbesondere zur Verwendung in einem Infotainmentsystem nach einem der Ansprüche 1 bis 12, wobei das externe Eingabegerät Bedienteile aufweist, die einem Funktionsbereich des tragbaren Endgeräts zugeordnet sind und Mittel zum Übertragen eines dem jeweiligen Bedienteil entsprechenden Steuersignals an ein für den Empfang der Steuersignale eingerichtetes Steuermittel des tragbaren Endgeräts.

14. Externes Eingabegerät nach Anspruch 13, worin die Bedienteile Tasten (201, 202, 203) sind und auf einem Gehäuse des Eingabegeräts weitere Bedienelemente vorgesehen sind, wie beispielsweise Knöpfe, Tasten, Joysticks, Steuerkreuze, berührungsempfindliche Felder oder Regler.

15. Externes Eingabegerät nach Anspruch 14, worin mindestens einige der weiteren Bedienelemente nativen Funktionen des tragbaren Endgeräts zugeordnet sind.

16. Externes Eingabegerät nach einem der Ansprüche 13 bis 15, worin die Bedienteile und Bedienelemente eine Anordnung aufweisen, die eine Bedienung ohne Sichtkontakt ermöglichen.

17. Externes Eingabegerät nach Anspruch 15 oder 16, worin die Bedienteile und die Bedienelemente eine haptisch fühlbare Ausgestaltung aufweisen.

18. Externes Eingabegerät nach einem der Ansprüche 13 bis 17, weiter enthaltend eine interne oder externe Energieversorgung.

19. Computerprogramm zur Ausführung einer Infotainment-Applikation auf einem tragbaren Endgerät mit den Schritten:
Empfangen eines Steuersignals von einem externen Eingabegerät zur Durchführung einer dem Steuersignal zugeordneten Funktion aus den Funktionsbereichen Kommunikation, Media und Navigation;
Feststellen des aktuellen Betriebszustands des tragbaren Endgeräts;
Durchführen einer Operation im tragbaren Endgerät in Abhängigkeit der vom externen Eingabegerät empfangenen Signale und des festgestellten Betriebszustands.

20. Computerprogramm nach Anspruch 19, mit dem weiteren Schritt:
Anzeigen einer grafischen Bedienoberfläche für jeden Funktionsbereich und Empfangen einer Benutzerauswahl aus dem externen Eingabegerät.

21. Computerprogramm nach Anspruch 19 oder 20, mit dem weiteren Schritt:
Zuweisen einer hohen Ausführungspriorität für das Computerprogramm bei Empfang eines Steuersignals vom externen Eingabegerät.
